# EUROPEAN PATENT SPECIFICATION

(11) **EP 3 449 863 B1**
(45) Date of publication and mention of the grant of the patent: **27.10.2021**
(21) Application number: 17788745.2
(22) Date of filing: 25.04.2017
(51) Int. Cl.: A61C 7/02, A61C 7/34, A61C 7/22

(54) **ORTHODONTIC BRACKET SYSTEM AND TOOTH ORTHODONTIC METHOD**
KIEFERORTHOPÄDISCHES KLAMMERSYSTEM UND KIEFERORTHOPÄDISCHES VERFAHREN
SYSTÈME D'APPAREIL ORTHODONTIQUE ET PROCÉDÉ ORTHODONTIQUE

(30) Priority: 26.04.2016 CN 201610264589
(43) Date of publication of application: 06.03.2019
(73) Proprietor: Ji, Li, Guangzhou, Guangdong 510000 (CN)
(72) Inventor: Ji, Li, Guangzhou, Guangdong 510000 (CN)
(74) Representative: Haseltine Lake Kempner LLP
(86) International application number: PCT/CN2017/081843
(87) International publication number: WO 2017/186093

(56) References cited:
- WO-A1-2016/119671
- CN-A- 102 458 285
- CN-A- 103 857 356
- CN-A- 105 852 994
- CN-U- 204 636 585
- CN-U- 205 964 197
- CN-Y- 201 244 093
- US-A- 2 046 414
- US-A- 3 486 231
- US-A1- 2011 269 093

## Description

### TECHNICAL FIELD

The present disclosure belongs to the field of tooth orthodontics, and more particularly relates to an orthodontic bracket setup and an orthodontic bracket setup kit.

### BACKGROUND

A bracket is an important component of the fixed orthodontic technique, which is an appliance for orthodontic malformation of the teeth and is directly affixed on surfaces of the crown. Archwire apply various types of orthodontic force to the teeth through the bracket to achieve a purpose of orthodontics.

In a process of orthodontic treatment, in order to perform a movement traction on the teeth, it is also necessary to move, via a traction element, the teeth to be corrected toward a design direction to achieve an effect of traction, which, on the other hand, is different due to different traction timings during a stage orthodontic process. There are two main methods available as follow.

A traction hook is integrally welded on a bracket body, and the traction hook is nondetachable. Since the traction hook protrudes from a surface of the bracket body, it is placed in a patient's mouth along the bracket body during an entire orthodontic. An obvious discomfort is brought to the patient due to an existence of the traction hook. Movements of the lips will cause the oral mucosa and teeth side buccal surfaces to rub against the traction hook, which make the oral mucosa and the teeth side buccal surfaces be easily damaged.

Another method is to temporarily insert a traction wire into the bracket body and bend it when the traction is required, so that an existing time of the traction hook in the oral cavity is shortened to reduce the discomfort of the oral cavity. However, since the traction hook is required to be bent temporarily, the bracket body fixed on the surfaces of the teeth is required to be processed. A processing space thereof is small and a processing view field thereof is narrow, thereby an installation and a disassembly thereof are made very inconvenient. This may further affect the traction effect, making a force of the traction hook insufficient to meet requirements of the orthodontics.

The documents US 3 486 231 A and US 2 046 414 A disclose orthodontic brackets with a screw adapted to lock an archwire.

### SUMMARY

It is an object of the present disclosure to overcome the deficiencies of the prior art, and an orthodontic bracket setup and orthodontic bracket setup kit are provided. The disclosure can perform a traction timely according to the traction timing of the orthodontic, thereby the discomfort of the oral cavity is reduced; in addition, it is very convenient in installation and disassembly, and the traction of the teeth is very reliable.

A technical solution thereof is as follow. The invention is defined in the attached independent claim to which reference should now be made. Further, optional features may be found in the sub-claims appended thereto.

In the following, the wording "internal screw" is used for "internal screw threads". Also the wording "external screw" is used for "external screw threads".

A traction/locking element includes an elongated nail body. The nail body has a cross-sectional area ranging from 0.06 mm² to 2.5 mm² and a length ranging from 0.8 mm to 4.5 mm. A front end of the nail body is a first fixing end, and a rear end thereof is a first screwing end. The first fixing end is provided with a connecting external screw, and an external diameter of the connecting external screw range from 0.2 mm to 1.6 mm. The first screwing end is provided with a force applying surface on at least an end position thereof.

A further technical solution of the present disclosure is as follow.

A detaching handle is further included. A front end of the detaching handle is a second fixing end, and a rear end thereof is a second screwing end. The second fixing end is connected to the first screwing end, and a joint therebetween has a detaching portion. The strength of the detaching portion is less than the strength of the nail body and the strength of a main segment of the detaching handle. The second screwing end is provided with a second force applying surface.

The detaching portion is an enclosing wall extending outwardly from an outer wall of the second fixing end. An inner portion of the second fixing end is hollow to form a concave portion. The first screwing end is located in the concave portion and enclosed by the enclosing wall.

At least a front end position of the detaching handle is made of plastic material, and the enclosing wall has a thickness ranging from 0.2 mm to 2 mm.

The detaching handle has a front section and a rear section. The second fixing end is located at the front section, and the second screwing end is located at the rear section. At least a part of the rear section of the detaching handle is cylindrical. A cylindrical outer wall is provided with an embossed pattern. The second force applying portion is the cylindrical outer wall.

A diameter of the detaching handle is gradually increased from the front end to the rear end.

The length of the detaching handle ranges from 10 mm to 35 mm.

The second force applying portion is a tangent plane that deviates from an axis of the detaching handle and is parallel to the axis of the detaching handle. A neck portion is further provided at the second force applying surface. A rear end of the neck portion is a head. A radial dimension of the neck portion is less than a radial dimension of the head.

A limiting platform is provided at the front end of the tangent plane.

The number of the first force applying surface is at least two. The at least two first force applying surfaces are uniformly circumferentially distributed at the first screwing end of the nail body, and a smooth transition is provided between the first force applying surfaces and adjacent surfaces thereof.

An orthodontic bracket setup kit includes a disassembly tool and an orthodontic bracket setup according to the aforementioned claim 1. The disassembly tool includes a rod body. A front end of the rod body is a third fixing end, a rear end thereof is a third screwing end. The third fixing end is provided with a matching portion matching the first screwing end. The third screwing end is provided with a third force applying portion.

An auxiliary sleeve is further included. An outer wall of a sleeve body of the auxiliary sleeve is cylindrical. At least a part of the outer wall thereof is provided with an anti-slip pattern. An inner wall of the sleeve body is provided with a fitting portion corresponding to the third screwing end. A length of the sleeve body is less than 30 mm.

An orthodontic bracket includes a bracket body. The bracket body is provided with a main slot, and a reserved hole is provided at a side of the bracket body. An inner diameter of the reserved hole ranges from 0.2 mm to 1.6 mm. An inner wall of the reserved hole is provided with a connecting internal screw.

An orthodontic bracket setup includes a bracket body and an elongated nail body. The bracket body is provided with a main slot, and a reserved hole is provided at a side of the bracket body. An inner diameter of the reserved hole ranges from 0.2 mm to 1.6 mm. An inner wall of the reserved hole is provided with a connecting internal screw. The nail body has a cross-sectional area ranging from 0.06 mm² to 2.5 mm². The nail body has a length ranging from 0.8 mm to 4.5 mm. A front end of the nail body is a first fixing end and a rear end thereof is a first screwing end. The first fixing end is provided with a connecting external screw, which matches the internal screw. The first screwing end is provided with a first force applying surface on at least an end position thereof.

The reserved hole is a through hole, and an interior thereof communicates with the main slot.

When the nail body is in the maximum tightening state, a front end of a pressing section protrudes from the main slot.

A tooth orthodontic method not according to the invention includes at least the following steps:
fixing a bracket body to surfaces of teeth, placing an archwire into a main slot of the bracket body, and applying an orthodontic force to the teeth through the bracket body to perform a first stage orthodontic on the teeth;
aligning a first fixing end of a nail body with a reserved hole of the bracket body, and applying a force, via a first force applying surface, to rotate a first screwing end of the nail body and make a connecting external screw of a first fixing end match and tighten with a connecting internal screw of the reserved hole, and applying a traction force, via the nail body, to the bracket body or locking the archwire via the nail body, thereby a second stage orthodontic is performed on the teeth;
removing the bracket body from the teeth, when the orthodontic is completed.

Further, when the nail body is tightened, a force is applied to a second force applying surface of a rear end of a detaching handle, to rotate the detaching handle, and the nail body is driven, via the first force applying surface, to rotate, thereby the connecting external screw of the first fixing end is made match with the connecting internal screw of the reserved hole; and when the nail body is tightened in the reserved hole, the detaching handle is disconnected, via a detaching portion on a front end thereof, from the nail body due to the force continuously applied on the second force applying surface.

The advantages or principles of the present disclosure are described below.
1. When performing the orthodontic, according to the requirements of the orthodontic, the bracket body is firstly affixed on the surfaces of the teeth, and the archwire is placed in the main slot of the bracket body. The arch wire applies the orthodontic force to the teeth via the bracket body, thereby a first stage orthodontic is performed on the teeth. When the traction is required, the first fixing end of the nail body is aligned with the reserved hole of the bracket body, and rotates, through the force applied via the first force applying surface, the first screwing end of the nail body, so that the connecting external screw of the first fixing end matches and is engaged with the internal screw of the reserved hole. The traction force is applied on the bracket body via the nail body or the archwire is locked via the nail body, thereby a second stage orthodontic is performed on the teeth. The present disclosure can perform the traction timely according to the traction timings of the orthodontic, and reduce the discomfort of the oral cavity; in addition, it is very convenient in installation and disassembly, and the traction of the teeth is very reliable.
2. The detaching handle is connected to the rear end of the nail body. The detaching handle can be integrally formed with the nail body. When the nail body is required to be installed, a medical staff can operate the detaching handle and fix the nail body to the bracket body. When the nail body is tightened, the force is continuously applied, and the detaching handle and the nail body are automatically disconnected at the detaching portion. This design has the following advantages.
   Since the size of the nail body is very small, it is extremely easy to drop or be lost during a storage or movement process. The nail body is designed with the detaching handle as an integral structure to reduce possibility of dropping or losing.
   Since the size of the nail body is very small, designing the nail body with the detaching handle as the integral structure can facilitate the medical staff to install the nail body, and operations thereof is convenient.
   When the installation operation is performed, if the nail body is installed in place and the force is continuously applied via the detaching handle, the detaching handle and the nail body are disconnected at the detaching portion. A tightening force of the nail body can be accurately controlled by material and size of the detaching portion.
   When the detaching handle is disconnected, the nail body is left on the bracket body, and the detaching handle can be discarded. The first screwing end of the nail body has a first force applying surface. The nail body can also be removed from the bracket body via the first force applying surface during the orthodontic process as needed.
3. The first screwing end is located in the concave portion of the detaching handle and is enclosed by the enclosing wall. By controlling material and thickness of the enclosing wall, tightening force of the nail body installation can be more accurately controlled. Moreover, it can be processed by injection molding or plastic molding during processing, and the processing thereof is convenient.
4. At least a part of the rear section of the detaching handle is cylindrical, and the outer wall thereof is provided with embossed pattern. The medical staff can install the nail body by hand twisting, which can be conveniently operated and a dependence on related instruments is reduced.
5. The diameter of the detaching handle is gradually increased from the front end to the rear end. When the same force is applied, an increase of the diameter of the rear end of the nail body can increase the torque of the nail body, thereby it is made convenient for the medical staff to carry out the installation operation.
6. The length of the detaching handle ranges from 10 mm to 35 mm. Since a space of the oral cavity is limited, when installing the nail body via the detaching handle, if the length of the detaching handle is too long, there is an insufficient space for the operation. If the length of the detaching handle is too short, it is inconvenient for the medical staff to hold. The length of the detaching handle ranging from 10 mm to 30 mm is relatively suitable for the operation.
7. The rear end of the detaching handle is provided with a tangent plane and a neck portion. The neck portion of the detaching handle can be clamped and restrained to an end of a screwing instrument. A force is applied to the tangent plane via the screwing instrument and drives the detaching handle to rotate. That is, the detaching handle can be operated in cooperation with the screwing instrument.
8. The limiting platform is arranged at the front end of the second force applying portion. When the detaching handle (and the nail body connected thereto) is installed on the screwing instrument, the detaching handle can be accurately limited via the limiting platform, thereby the neck portion of the detaching handle is aligned with the screwing instrument.
9. At least two first force applying surfaces of the nail body are uniformly circumferentially distributed at the first screwing end of the nail body, and the smooth transition is provided between the first force applying surfaces and the adjacent surfaces thereof. Since the first force applying surface of the nail body is uniformly circumferentially distributed, when tightening the nail body, the force can be applied from multiple surfaces to balance the force applied on the nail body. The smooth transition between the first force applying surface and the adjacent surfaces thereof reduces friction on the oral cavity.
   When the nail body is in the maximum tightening state, the front end of the pressing section protrudes from the main slot, and at this time, the nail body can lock the archwire to avoid shift of the archwire and improve accuracy of the archwire for the orthodontic.
10. The disassembly tool and the traction/locking element are assembled. In rare cases, the detaching handle may be disengaged and disconnected in advance. At this time, the medical staff can install via the disassembly tool. In addition, in some cases, the traction element is required to be removed. At this time, the removal can be realized by the disassembly tool, which is very convenient to use.
11. When disassembling, while the disassembly tool is small, the force is insufficient when screwing, the auxiliary sleeve can be further used. Since the auxiliary sleeve adopts a sleeve type structure, the diameter thereof is larger than the diameter of the disassembly tool. When operating, a small force applied can achieve a relatively good screwing force, which is more convenient to operate. However, since the oral area is small and the disassembly tool is provided at the front of the auxiliary sleeve, the length of the auxiliary sleeve should not be too long.

It should be noted that the aforementioned "first", "second", and the like are not intended to limit the quantity or order, but mere based on the distinction of component names. The aforementioned "front" and "back" are merely definitions for relative positions, not for the absolute positions thereof, for example, the aforementioned "fixing end" is not intended to be limited at the head of the absolute front end of the nail body.

### BRIEF DESCRIPTION OF THE DRAWINGS

FIG. 1 is a structural view of an orthodontic bracket setup in accordance with a first embodiment of the present disclosure (with a detaching handle being removed).
FIG. 2 is a structural view of a traction element in the first embodiment of the present disclosure.
FIG. 3 is a structural view of a disassembly tool in the first embodiment of the present disclosure.
FIG. 4 is a partial cross-sectional view of an auxiliary sleeve matching the disassembly tool.
FIG. 5 is a side view of FIG. 4 viewed from direction *A*.
FIG. 6 is a structural view of a detaching handle in the first embodiment of the present disclosure.
FIG. 7 is a partial enlarged view of a rear end of the detaching handle of FIG. 6.
FIG. 8 is a partial enlarged view of a front end of the detaching handle in FIG. 6.
FIG. 9 is a structural view of a nail body of FIG. 8.
FIG. 10 is a structural view of an orthodontic bracket setup in accordance with a second embodiment of the present disclosure (with a detaching handle being removed and being in a state before being locked).
FIG. 11 is a structural view of the orthodontic bracket setup in the second embodiment of the present disclosure (with the detaching handle being removed and being in a state after being locked).

### LIST OF REFERENCE NUMBERS

10, Nail body; 11, first fixing end; 111, connecting external screw; 12, first screwing end; 121, first force applying surface; 20, detaching handle; 21, second fixing end; 211, enclosing wall; 212, concave portion; 22, second screwing end; 221, embossing pattern; 222, tangent plane; 223, neck portion; 224, head; 225, limiting platform; 23, detaching portion; 30, bracket body; 31, main slot; 32, reserved hole; 40, archwire; 50, rod body; 51, third fixing end; 511, matching portion; 52, third screwing end; 60, sleeve body; 61, outer wall; 611, anti-slip pattern; 62, outer shaft hole; 63 , internal counterbore; 64, inner section, 65, step.

### DETAILED DESCRIPTION OF THE EMBODIMENTS

The embodiments of the present disclosure are described in detail below.

### Embodiment 1

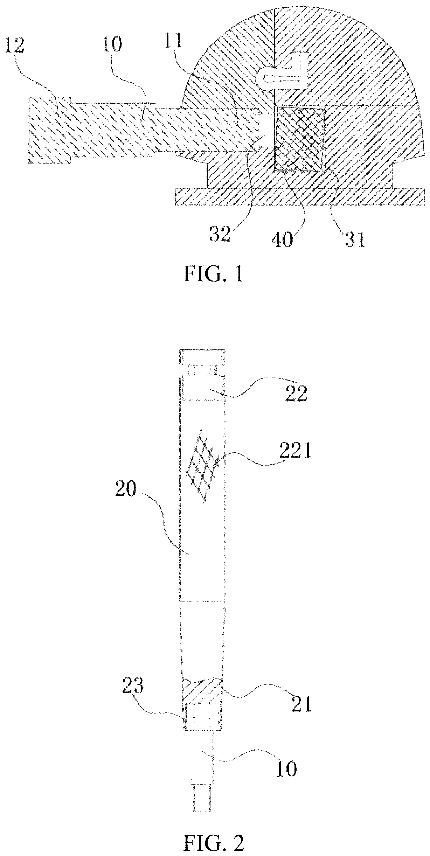

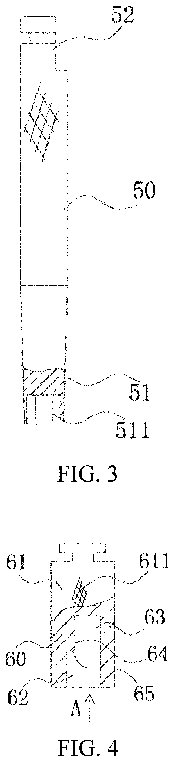

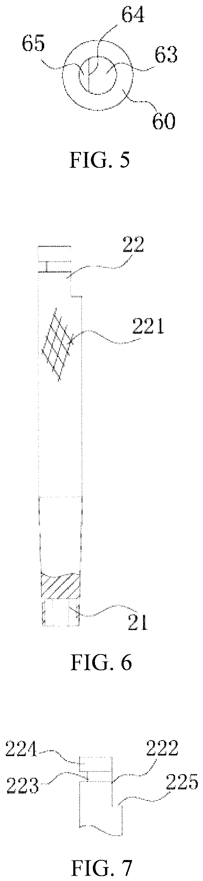

As shown in FIG. 1 to FIG. 9, an orthodontic bracket setup includes a bracket body 30 and a traction element. The traction element includes an elongated nail body 10 and a detaching handle 20. A front end of the nail body 10 is a first fixing end 11, and a rear end thereof is a first screwing end 12. The first fixing end 11 is provided with a connecting external screw 111. The first screwing end 12 is provided with a first force applying surface 121 on at least an end position thereof. The bracket body 30 is provided with a main slot 31, and a reserved hole 32 is provided at a side portion of the bracket body 30. The reserved hole 32 is a through hole, and an interior thereof communicates with the main slot 31. An inner diameter of the reserved hole 32 ranges from 0.2 mm to 1.6 mm (wherein, preferably from 0.5 mm to 1.2 mm). An inner wall of the reserved hole 32 is provided with a connecting internal screw. The nail body 10 has a cross-sectional area of ranging from 0.06 mm² to 2.5 mm² and a length ranging from 0.8 mm to 4.5 mm (preferably from 1.5 mm to 2.2 mm). The front end of the nail body 10 is the first fixing end 11, and the rear end thereof is the first screwing end 12. The first fixing end 11 is provided with a connecting external screw 111. An external diameter of the connecting external screw 111 ranges from 0.2 mm to 1.6 mm (wherein preferably from 0.5 mm to 1.2mm). The connecting external tread 111 matches the connecting internal screw. The first screwing end 12 is provided with the first force applying surface 121 on at least the end position thereof.

A front end of the detaching handle 20 is a second fixing end 21, and a rear end thereof is a second screwing end 2. The second fixing end 21 is connected to the first screwing end 12, and a joint therebetween has a detaching portion 23. The detaching portion 23 has a strength less than a strength of the nail body 10 and a strength of a main segment of the detaching handle 20. The second screwing end 22 is provided with a second force applying surface.

The detaching handle 20 has a length ranging from 10 mm to 35 mm (preferably from15 mm to 22 mm). A diameter of the detaching handle 20 increases gradually from the front end to the rear end. The detaching portion 23 is an enclosing wall 211 extending outwardly from an outer wall of the second fixing end 21. An interior of the second fixing end 21 is hollow to form a concave portion 212. The first screwing end 12 is located in the concave portion 212 and is enclosed by the enclosing wall 211. At least a front end position of the detaching handle 20 is made of plastic material. The wall 211 has a thickness ranging from 0.2 mm to 2 mm (wherein preferably from 0.4 mm to 0.7 mm). The detaching handle 20 has a front section and a rear section. The second fixing end 21 is located at the front section, and the second screwing end 22 is located at the rear section. At least a part of the rear section of the detaching handle 20 is cylindrical. A cylindrical outer wall is provided with a embossing pattern 221. The second force applying portion is a tangent plane 222 and a cylindrical outer wall. The tangent plane 222 deviates from an axis of the detaching handle 20 and is parallel to the axis of the detaching handle 20. A neck portion 223 is further provided at the second force applying surface. A rear end of the neck portion 223 is a head 224. A radial dimension of the neck portion 223 is less than a radial dimension of the head 224. A limiting platform 225 is provided at a front end of the tangent plane 222.

The number of the first force applying surface 121 is six. The six first force applying surfaces 121 are uniformly circumferentially distributed at the first screwing end 12 of the nail body 10, and a smooth transition is provided between the first force applying surfaces 121 and adjacent surfaces thereof.

In this embodiment, the forgoing traction element, a disassembly tool, and an auxiliary sleeve are assembled as a kit via a package. The disassembly tool includes a rod body 50. A front end of the rod body 50 is a third fixing end 51, and a rear end thereof is a third screw end 52. The third fixing end 51 is provided with a matching portion 511 which matches the first screwing end. The third screwing end 52 is provided with a third force applying portion. An outer wall 61 of a sleeve body 60 of the auxiliary sleeve is cylindrical, and is provided with an anti-slip pattern 611. An inner wall of the sleeve body 60 is provided with a fitting portion corresponding to the third screwing end 52. In this embodiment, a specific structure of the fitting portion is as follow. An outer shaft hole 62 is provided in the sleeve body 60, and an inner counterbore 63 is provided in an interior of the outer shaft hole 62. A side surface of the inner counterbore 63 forms an inner section 64. A step portion 65 is formed between the outer shaft hole 62 and the inner counterbore 63. A length of the sleeve body 60 is less than 30 mm.

The advantages or principles of the present disclosure are described below.
1. When performing an orthodontic, according to the requirements of the orthodontic, the bracket body 30 is firstly affixed on the surfaces of the teeth, and the archwire 40 is placed in the main slot 31 of the bracket body 30. The archwire 40 applies the orthodontic force to the teeth via the bracket body 30, thereby g a first stage orthodontic is performed on the teeth. When the traction is required, the first fixing end 11 of the nail body 10 is aligned with the reserved hole 32 of the bracket body 30, and the first screwing end 12 of the nail body 10 is rotated by the force applied via the first force applying surface 121, so that the connecting external screw 111 of the first fixing end 11 matches and is engaged with the connecting internal screw of the reserved hole 32. The traction force is applied on the bracket body 30 via the nail body 10, or the archwire 40 is locked via the nail body 10, thereby a second stage orthodontic is performed on the teeth. The present disclosure can perform the traction timely according to the traction timings of the orthodontic, and reduce the discomfort of the oral cavity. In addition, it is very convenient in installation and disassembly, and the traction of the teeth is very reliable.
2. The detaching handle 20 is connected to the rear end of the nail body 10. The detaching handle 20 can be integrally formed with the nail body 10. When the nail body 10 is required to be installed, a medical staff can operate the detaching handle 20 and fix the nail body 10 to the bracket body 30. When the nail body 10 is tightened, the force is continuously applied, and the detaching handle 20 and the nail body 10 are automatically disconnected at the detaching portion 23. This design has the following advantages.
   Since the size of the nail body 10 is very small, it is extremely easy to drop or be lost during a storage or movement process. The nail body 10 is designed with the detaching handle 20 as an integral structure to reduce possibility of dropping or being lost.
   Since the size of the nail body 10 is very small, designing the nail body 10 with the detaching handle 20 as the integral structure can facilitate the medical staff to install the nail body 10, and operations thereof is convenient.
   When the installation operation is performed, if the nail body 10 is installed in place and the force is continuously applied via the detaching handle 20, the detaching handle 20 and the nail body 10 are disconnected at the detaching portion 23. The tightening force of the nail body 10 can be accurately controlled by material and size of the detaching portion 23.
   When the detaching handle 20 is disconnected, the nail body 10 is left on the bracket body 30, and the detaching handle 20 can be discarded. The first screwing end 12 of the nail body 10 has a first force applying surface 121. The nail body 10 can also be removed from the bracket body 30 via the first force applying surface 121 during the orthodontic process as needed.
3. The first screwing end 12 is located in the concave portion 212 of the detaching handle 20 and is enclosed by the enclosing wall 211. By controlling material and thickness of the enclosing wall 211, tightening force of the nail body installation can be more accurately controlled. Moreover, it can be processed by injection molding or plastic molding during processing, and the processing thereof is convenient.
4. At least a part of the rear section of the detaching handle 20 is cylindrical, and the outer wall thereof is provided with embossed pattern 221. The medical staff can install the nail body 10 by hand twisting, which can be conveniently operated, and a dependence on related instruments is reduced.
5. The diameter of the detaching handle 20 is gradually increased from the front end to the rear end. When the same force is applied, an increase of the diameter of the rear end of the nail body 10 can increase the torque of the nail body 10, thereby it is made convenient for the medical staff to carry out the installation operation.
6. The length of the detaching handle 20 ranges from 10 mm to 35 mm. Since a space of the oral cavity is limited, when installing the nail body 10 via the detaching handle 20, if the length of the detaching handle 20 is too long, there is an insufficient space for the operation. If the length of the detaching handle 20 is too short, it is inconvenient for the medical staff to hold. The length of the detaching handle 20 ranging from 10 mm to 30 mm is relatively suitable for the operation.
7. The rear end of the detaching handle 20 is provided with the tangent plane 222 and the neck portion 223. The neck portion 223 of the detaching handle 20 can be clamped and restrained to an end of a screwing instrument. A force is applied to the tangent plane 222 via the screwing instrument and drives the detaching handle 20 to rotate. That is, the detaching handle 20 can be operated in cooperation with the screwing instrument.
8. The limiting platform 225 is arranged at the front end of the second force applying portion. When the detaching handle 20 (and the nail body 10 connected thereto) is installed on the screwing instrument, the detaching handle 20 can be accurately limited via the limiting platform, thereby the neck portion 223 of the detaching handle 20 is aligned with the screwing instrument.
9. At least two first force applying surfaces 121 of the nail body 10 are uniformly circumferentially distributed at the first screwing end 12 of the nail body 10, and the smooth transition is provided between the first force applying surfaces 121 and the adjacent surfaces thereof. Since the first force applying surface 121 of the nail body 10 is uniformly circumferentially distributed, when tightening the nail body 10, the force can be applied from multiple surfaces to balance the force applied on the nail body 10. The smooth transition between the first force applying surface 121 and the adjacent surfaces thereof reduces friction on the oral cavity.
10. In the present embodiment, the disassembly tool is simultaneously provided, because: firstly, the detaching handle 10 is provided from a convenient aspect, and the detaching handle 10 is integrally formed with the traction member, so that the medical staff can conveniently install the traction member and the possibility of losing or dropping of the traction element is reduced. When the traction element is installed in position, the detaching handle 10 will be automatically disconnected, but in rare cases, the detaching handle 10 may be disengaged and disconnected in advance. At this time, the medical staff can install via the disassembly tool. In addition, in some cases, the traction element is required to be removed. At this time, the removal thereof can be realized by the disassembly tool, which is very convenient to use. There are two points which should be noted below.
   A specific structure of the disassembly tool can adopt a structure similar to that of the detaching handle 10. For example, the third fixing end 51 of the disassembly tool is similar to the second fixing end 21 of the detaching handle 10, the third screwing end 52 of the disassembly tool is similar to the second screwing end 22 of the detaching handle 10, and the third force applying portion of the disassembly tool is similar to the second force applying portion of the detaching handle 10. Moreover, a tangent plane, a neck portion, a limiting platform, and an embossing pattern similar or identical to that of the detaching handle 10 can be used for the purpose of operation via the screwing instrument. The matching portion can also adopt a structure similar to the enclosing wall 211 of the detaching handle 10, while the purpose here is different from the purpose of the disconnecting of the detachable detaching handle 10, where an exact match with the first screwing end 12 is required. In order to increase the strength, the disassembly tool can be made of steel or other high strength materials.
   The disassembly tool can be used not only for the disassembly and assembly of the traction element in this embodiment, but also for the disassembly and assembly of the traction element in the next embodiment, and the principle and advantages thereof are the same as those of this embodiment.
11. When disassembling, while the disassembly tool is small, the force is insufficient when screwing, the auxiliary sleeve can be further used. Since the auxiliary sleeve adopts a sleeve type structure, the diameter thereof is larger than the diameter of the disassembly tool. When operating, a small force applied can achieve a relatively good screwing force, which is more convenient to operate. However, since the oral area is small and the disassembly tool is provided at the front of the auxiliary sleeve, the length of the auxiliary sleeve should not be too long.
12. The auxiliary sleeve can be used not only with the disassembly tool, but also with the detaching handle. The structure of the fitting portion thereof corresponds to structures of tail ends of the disassembly tool and the detaching handle.

### Embodiment 2

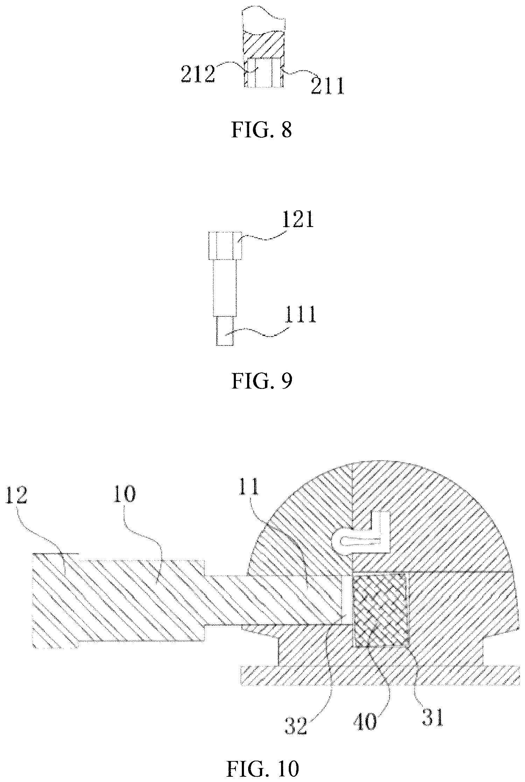

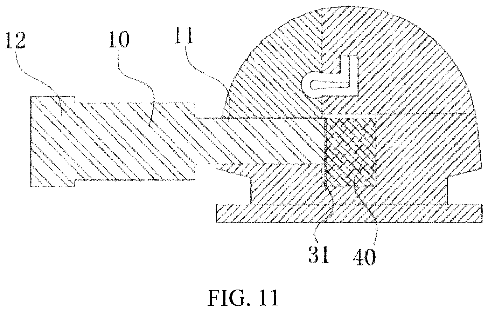

As shown in FIGS. 10 and 11, in the present embodiment, when the nail body 10 is in the maximum tightening state, a front end of a pressing section 122 protrudes from the main slot 31.

Since a size of the archwire 40 is less than a size of the main slot 31 (otherwise the archwire 40 cannot be placed in the main slot 31), the archwire 40 may deviate within the main slot 31, thereby the effect of the orthodontic treatment is affected. In the present embodiment, a size of the nail body 10 is slightly longer than that of the first embodiment. At this time, the nail body 10 passes through the reserved hole 32 and is pressed against the archwire 40. The archwire 40 can be locked via the nail body 10. Compared with the first embodiment, this embodiment can reduce the deviation of the archwire 40 and improve the accuracy of the archwire 40 for orthodontic.

## Claims

1. An orthodontic bracket setup, comprising:
a bracket body (30) and an elongated nail body (10), wherein the bracket body is provided with a main slot (31), a reserved hole is provided at a side of the bracket body, an inner diameter of the reserved hole ranges from 0.2 to 1.6 mm, an inner wall of the reserved hole is provided with connecting internal screw threads,
wherein the nail body has a cross-sectional area ranging from 0.06 mm² to 2.5 mm², and a length ranging from 0.8 mm to 4.5 mm, a front end of the nail body is a first fixing end (11) adapted to lock the archwire, a rear end thereof is a first screwing end (12), the first fixing end is provided with connecting external screw threads (111), and an external diameter of the connecting external screv threads ranges from 0.2 mm to 1.6 mm, the first screwing end (12) is provided with a first force applying surface (121) on at least an end position thereof
a detaching handle (20), wherein a front end of the detaching handle is a second fixing end (21), a rear end thereof is a second screwing end (22), the second fixing end (21) is adapted to be connected to the first screwing end (12), and a joint therebetween has a detaching portion (23), the strength of the detaching portion is less than the strength of the nail body and the strength of a main segment of the detaching handle, and the second screwing end is provided with a second force applying surface (222);
wherein the detaching portion (23) is an enclosing wall (211) extending outwardly from an outer wall of the second fixing end (21), an inner portion of the second fixing end is hollow to form a concave portion, and the first screwing end (12) is adapted to be located in the concave portion and enclosed by the enclosing wall.

2. The orthodontic bracket setup according to claim 1, wherein at least a front end position of the detaching handle is made of plastic material, and the enclosing wall has a thickness ranging from 0.2 to 2 mm.

3. The orthodontic bracket setup according to claim 1, wherein the detaching handle (20) has a front section and a rear section, the second fixing end is located at the front section, the second screwing end is located at the rear section; at least a part of the rear section of the detaching handle is cylindrical, and a cylindrical outer wall is provided with an embossed pattern, and the second force applying surface is the cylindrical outer wall.

4. The orthodontic bracket setup according to claim 1, wherein a diameter of the detaching handle is gradually increased from the front end to the rear end.

5. The orthodontic bracket setup according to claim 1, wherein the length of the detaching handle ranges from 10 mm to 35 mm.

6. The orthodontic bracket setup according to any one of claims 1 to 5, wherein the second force applying surface is a tangent plane (222) that deviates from an axis of the detaching handle and is parallel to the axis of the detaching handle, a neck portion is further provided at the second force applying surface, a rear end of the neck is ahead, and a radial dimension of the neck portion is less than a radial dimension of the head.

7. The orthodontic bracket setup according to claim 6, wherein a limiting platform is provided at the front end of the tangent plane.

8. The orthodontic bracket setup according to any one of claims 1 to 5, wherein the number of the first force applying surface is at least two, the at least two first force applying surfaces are uniformly circumferentially distributed at the first screwing end of the nail body, and a smooth transition is provided between the first force applying surfaces and adjacent surfaces thereof.

9. A orthodontic bracket setup kit, comprising: a disassembly tool and a orthodontic bracket setup according to claim 1; wherein the disassembly tool comprises a rod body, a front end of the rod body is a third fixing end, a rear end thereof is a third screwing end, the third fixing end is provided with a matching portion matching the first screwing end, and the third screwing end is provided with a third force applying portion.

10. The orthodontic bracket setup kit according to claim 9, further comprising an auxiliary sleeve, an outer wall of a sleeve body of the auxiliary sleeve is cylindrical, at least a part of the outer wall thereof is provided with an anti-slip pattern, an inner wall of the sleeve body is provided with a fitting portion corresponding to the third screwing end, and a length of the sleeve body is less than 30 mm.

11. The orthodontic bracket setup according to claim 1, wherein when the nail body is in the maximum tightening state, a front end of a pressing section protrudes from the main slot.

## Patentansprüche

1. Kieferorthopädischer Bracket-Aufbau, umfassend:
einen Bracket-Körper (30) und einen länglichen Nagelkörper (10), wobei der Bracket-Körper mit einem Hauptschlitz (31) versehen ist,
wobei ein reserviertes Loch an einer Seite des Bracket-Körpers vorgesehen ist, ein Innendurchmesser des reservierten Lochs zwischen 0,2 und 1,6 mm beträgt, eine Innenwand des reservierten Lochs mit einem Verbindungsinnengewinde versehen ist,
wobei der Nagelkörper eine Querschnittsfläche zwischen 0,06 mm² und 2,5 mm² und eine Länge von 0,8 mm bis 4,5 mm hat, wobei ein vorderes Ende des Nagelkörpers ein erstes Befestigungsende (11) ist, das zum Arretieren des Bogendrahts ausgeführt ist, ein hinteres Ende davon ein erstes Schraubende (12) ist, wobei das erste Befestigungsende mit einem Verbindungsaußengewinde (111) versehen ist und ein Außendurchmesser des Verbindungsaußengewindes zwischen 0,2 mm und 1,6 mm beträgt, wobei das erste Schraubende (12) mit einer ersten Kraftbeaufschlagungsfläche (121) an mindestens einer Endposition davon versehen ist,
einen Lösegriff (20),
wobei ein vorderes Ende des Lösegriffs ein zweites Befestigungsende (21) ist, ein hinteres Ende davon ein zweites Schraubende (22) ist, wobei das zweite Befestigungsende (21) dazu ausgeführt ist, mit dem ersten Schraubende (12) verbunden zu werden,
und wobei ein Gelenk dazwischen einen Löseabschnitt (23) hat, wobei die Festigkeit des Löseabschnitts geringer als die Festigkeit des Nagelkörpers und die Festigkeit eines Hauptsegments des Lösegriffs ist, und wobei das zweite Schraubende mit einer zweiten Kraftbeaufschlagungsfläche (222) versehen ist,
wobei der Löseabschnitt (23) eine umschließende Wand (211) ist, die sich von einer Außenwand des zweiten Befestigungsendes (21) nach außen erstreckt,
ein innerer Abschnitt des zweiten Befestigungsendes hohl ist, um einen konkaven Abschnitt zu bilden, und wobei das erste Schraubende (12) dazu ausgeführt ist, in dem konkaven Abschnitt angeordnet und von der umschließenden Wand umschlossen zu sein.

2. Kieferorthopädischer Bracket-Aufbau nach Anspruch 1, wobei mindestens eine vordere Endposition des Lösegriffs aus Kunststoffmaterial hergestellt ist und die umschließende Wand eine Dicke zwischen 0,2 bis 2 mm hat.

3. Kieferorthopädischer Bracket-Aufbau nach Anspruch 1, wobei der Lösegriff (20) einen vorderen Abschnitt und einen hinteren Abschnitt hat, das zweite Befestigungsende an dem vorderen Abschnitt angeordnet ist, das zweite Schraubende an dem hinteren Abschnitt angeordnet ist, mindestens ein Teil des hinteren Abschnitts des Lösegriffs zylindrisch ist und eine zylindrische Außenwand mit einem geprägten Muster versehen ist und die zweite Kraftbeaufschlagungsfläche die zylindrische Außenwand ist.

4. Kieferorthopädischer Bracket-Aufbau nach Anspruch 1, wobei sich ein Durchmesser des Lösegriffs allmählich von dem vorderen Ende zu dem hinteren Ende vergrößert.

5. Kieferorthopädischer Bracket-Aufbau nach Anspruch 1, wobei die Länge des Lösegriffs zwischen 10 mm und 35 mm beträgt.

6. Kieferorthopädischer Bracket-Aufbau nach einem der Ansprüche 1 bis 5, wobei die zweite Kraftbeaufschlagungsfläche eine Tangentialebene (222) ist, die von einer Achse des Lösegriffs abweicht und parallel zu der Achse des Lösegriffs verläuft, wobei ein Halsabschnitt ferner an der zweiten Kraftbeaufschlagungsfläche vorgesehen ist, ein hinteres Ende des Halses ein Kopf ist und eine radiale Abmessung des Halsabschnitts geringer als eine radiale Abmessung des Kopfs ist.

7. Kieferorthopädischer Bracket-Aufbau nach Anspruch 6, wobei eine Begrenzungsplattform an dem vorderen Ende der Tangentialebene vorgesehen ist.

8. Kieferorthopädischer Bracket-Aufbau nach einem der Ansprüche 1 bis 5, wobei die Anzahl der ersten Kraftbeaufschlagungsfläche mindestens zwei ist, die mindestens zwei ersten Kraftbeaufschlagungsflächen umfangsmäßig gleichmäßig an dem ersten Schraubende des Nagelkörpers verteilt sind und ein glatter Übergang zwischen den ersten Kraftbeaufschlagungsflächen und benachbarten Flächen davon vorgesehen ist.

9. Kieferorthopädischer Bracket-Aufbausatz, umfassend: ein Demontagewerkzeug und einen kieferorthopädischen Bracket-Aufbau nach Anspruch 1, wobei das Demontagewerkzeug einen Stabkörper umfasst, ein vorderes Ende des Stabkörpers ein drittes Befestigungsende ist, ein hinteres Ende davon ein drittes Schraubende ist, das dritte Befestigungsende mit einem entsprechenden Abschnitt versehen ist, der dem ersten Schraubende entspricht, und das dritte Schraubende mit einem dritten Kraftbeaufschlagungsabschnitt versehen ist.

10. Kieferorthopädischer Bracket-Aufbausatz nach Anspruch 9, ferner umfassend eine Hilfshülse, wobei eine Außenwand eines Hülsenkörpers der Hilfshülse zylindrisch ist, mindestens ein Teil der Außenwand davon mit einem Antirutschmuster versehen ist, eine Innenwand des Hülsenkörpers mit einem Montageabschnitt versehen ist, der dem dritten Schraubende entspricht, und eine Länge des Hülsenkörpers geringer als 30 mm ist.

11. Kieferorthopädischer Bracket-Aufbau nach Anspruch 1, wobei ein vorderes Ende eines Pressabschnitts von dem Hauptschlitz vorragt, wenn der Nagelkörper in dem maximalen Festziehzustand ist.

## Revendications

1. Installation de support orthodontique, comprenant
un corps de support (30) et un corps de clou allongé (10), le corps de support étant pourvu d'une fente principale (31), un trou réservé étant prévu au niveau d'un côté du corps de support, un diamètre intérieur du trou réservé étant dans la plage de 0,2 à 1,6 mm, une paroi intérieure du trou réservé étant pourvue de filetages internes de connexion,
le corps de clou ayant une surface de section transversale dans la plage de 0,06 mm² à 2,5 mm², et une longueur dans la plage de 0,8 mm à 4,5 mm, une extrémité avant du corps de clou étant une première extrémité de fixation (11) adaptée pour bloquer l'arc, une extrémité arrière de celui-ci étant une première extrémité de vissage (12), la première extrémité de fixation étant pourvue de filetages externes de connexion (111), et un diamètre externe des filetages externes de connexion étant dans la plage de 0,2 mm à 1,6 mm, la première extrémité de vissage (12) étant pourvue d'une première surface d'application de force (121) sur au moins une position d'extrémité de celle-ci ;
une poignée de détachement (20), une extrémité avant de la poignée de détachement étant une deuxième extrémité de fixation (21), une extrémité arrière de celle-ci étant une deuxième extrémité de vissage (22), la deuxième extrémité de fixation (21) étant adaptée pour être connectée à la première extrémité de vissage (12), et un joint entre elles ayant une partie de détachement (23), la résistance de la partie de détachement étant inférieure à la résistance du corps de clou et à la résistance d'un segment principal de la poignée de détachement, et la deuxième extrémité de vissage étant pourvue d'une deuxième surface d'application de force (222) ;
la partie de détachement (23) étant une paroi d'enceinte (211) s'étendant vers l'extérieur depuis une paroi extérieure de la deuxième extrémité de fixation (21), une partie intérieure de la deuxième extrémité de fixation étant creuse pour former une partie concave, et la première extrémité de vissage (12) étant adaptée pour être située dans la partie concave et entourée par la paroi d'enceinte.

2. Installation de support orthodontique selon la revendication 1, au moins une position d'extrémité avant de la poignée de détachement étant réalisée en matière plastique, et la paroi d'enceinte ayant une épaisseur dans la plage de 0,2 à 2 mm.

3. Installation de support orthodontique selon la revendication 1, la poignée de détachement (20) ayant une section avant et une section arrière, la deuxième extrémité de fixation étant située au niveau de la section avant, la deuxième extrémité de vissage étant située au niveau de la section arrière ; au moins une partie de la section arrière de la poignée de détachement étant cylindrique, et une paroi extérieure cylindrique étant munie d'un motif en relief, et la deuxième surface d'application de force étant la paroi extérieure cylindrique.

4. Installation de support orthodontique selon la revendication 1, un diamètre de la poignée de détachement étant progressivement augmenté de l'extrémité avant à l'extrémité arrière.

5. Installation de support orthodontique selon la revendication 1, la longueur de la poignée de détachement étant dans la plage de 10 mm à 35 mm.

6. Installation de support orthodontique selon l'une quelconque des revendications 1 à 5, la deuxième surface d'application de force étant un plan tangent (222) qui s'écarte d'un axe de la poignée de détachement et est parallèle à l'axe de la poignée de détachement, une partie de col étant en outre prévue au niveau de la deuxième surface d'application de force, une extrémité arrière du col étant en avant, et une dimension radiale de la partie de col étant inférieure à une dimension radiale de la tête.

7. Installation de support orthodontique selon la revendication 6, une plateforme de limitation étant prévue au niveau de l'extrémité avant du plan tangent.

8. Installation de support orthodontique selon l'une quelconque des revendications 1 à 5, le nombre de la première surface d'application de force étant d'au moins deux, les au moins deux premières surfaces d'application de force étant uniformément réparties circonférentiellement au niveau de la première extrémité de vissage du corps de clou, et une transition lisse étant prévue entre les premières surfaces d'application de force et les surfaces adjacentes de celles-ci.

9. Kit d'installation de support orthodontique, comprenant : un outil de démontage et une installation de support orthodontique selon la revendication 1 ; l'outil de démontage comprenant un corps de tige, une extrémité avant du corps de tige étant une troisième extrémité de fixation, une extrémité arrière de celle-ci étant une troisième extrémité de vissage, la troisième extrémité de fixation étant munie d'une partie d'adaptation correspondant à la première extrémité de vissage, et la troisième extrémité de vissage étant munie d'une troisième partie d'application de force.

10. Kit d'installation de support orthodontique selon la revendication 9, comprenant en outre un manchon auxiliaire, une paroi extérieure d'un corps de manchon du manchon auxiliaire étant cylindrique, au moins une partie de sa paroi extérieure étant pourvue d'un motif antidérapant, une paroi intérieure du corps de manchon étant pourvue d'une partie d'adaptation correspondant à la troisième extrémité de vissage, et une longueur du corps de manchon étant inférieure à 30 mm.

11. Installation de support orthodontique selon la revendication 1, lorsque le corps de clou est dans l'état de serrage maximal, une extrémité avant d'une section de pression faisant saillie à partir de la fente principale.
